Europäisches Patentamt

European Patent Office

Office européen des brevets

(11) Veröffentlichungsnummer: **0 260 609**
**A1**

(12) # EUROPÄISCHE PATENTANMELDUNG

(21) Anmeldenummer: 87113273.4

(51) Int. Cl.4: **H01R 13/447**

(22) Anmeldetag: **10.09.87**

(30) Priorität: **19.09.86 DE 8625125 U**

(43) Veröffentlichungstag der Anmeldung:
**23.03.88 Patentblatt 88/12**

(84) Benannte Vertragsstaaten:
**AT BE CH DE FR GB IT LI LU NL SE**

(71) Anmelder: **Siemens Aktiengesellschaft Berlin
und München
Wittelsbacherplatz 2
D-8000 München 2(DE)**

(72) Erfinder: **Stögmüller, Rupert, Dipl.-Ing. (FH)
Parksiedlung 10
D-8011 Poing(DE)**

(54) **Elektrische Kontaktiervorrichtung mit Kontaktschutzeinrichtung.**

(57) Bei einem Handfunkgerät der Nachrichtentechnik wird die Ladevorrichtung für die eingebaute Batterie über einen verdeckten Stecker angeschlossen. Die Abdeckung des Steckers wird beim Auflegen des Handfunkgerätes auf das Ladegerät automatisch geöffnet und so der Weg für den Gegenstecker des Ladegerätes freigegeben.

FIG 1

EP 0 260 609 A1

## Elektrische Kontaktiervorrichtung mit Kontaktschutzeinrichtung

Die Erfindung bezieht sich auf eine elektrische Kontaktiervorrichtung mit Kontaktschutzeinrichtung, insbesondere für die Stromversorgung bewegbarer nachrichtentechnischer Geräte.

Bei wiederaufladbaren Stromversorgungen von elektrischen Geräten, insbesondere hier im Beispiel von Handfunkgeräten für Funktelefone, soll der Anschluß zum Ladegerät verdeckt und geschützt angeordnet sein.

Der Erfindung liegt die Aufgabe zugrunde, eine Verriegelung anzugeben, die sich automatisch beim Auflegen des Handapparates auf die Ladevorrichtung entriegelt.

Erfindungsgemäß wird dies dadurch erreicht, daß der einzelne Kontaktstift des Gerätes im Inneren seines Gehäuses hinter einer senkrecht zur Steckrichtung im Gehäuse des Gerätes verschiebbaren Scheibe angeordnet ist, die durch eine Feder im Ruhezustand geschlossen ist und die nach außen hin eine Nut hat, in die ein Pimpel einer Betätigungsstange im Gehäuse des Stromversorgungsgerätes eingreift und die Verschlußscheibe vor der Kontaktierung gegen den Druck der Feder zur Seite schiebt und den Weg für die Kontaktstifte freigibt.

Weitere vorteilhafte Ausbildungen der Erfindung finden sich in den Unteransprüchen.

Nachstehend wird die Erfindung anhand eines in den Figuren dargestellten Ausführungsbeispiels näher erläutert.

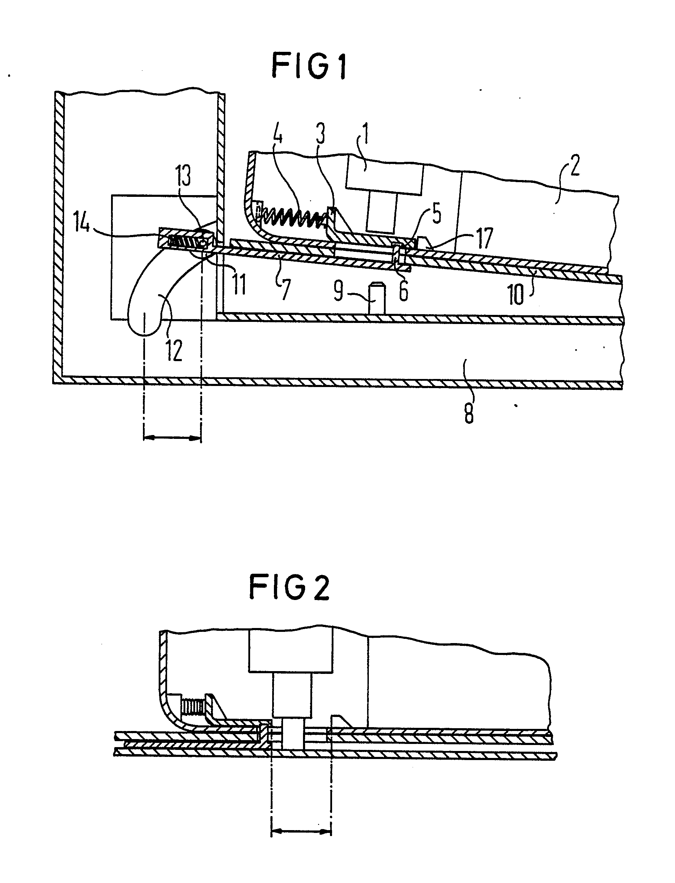

Die Figur 1 zeigt dabei die für die Kontaktierung wichtigen Einzelheiten des Handfunkgerätes samt dem Ladegerät im nicht kontaktierten Zustand.

Die Figur 2 zeigt die Einrichtung im kontaktierten Zustand.

Das Handfunkgerät, dessen hierfür wichtiger Ausschnitt mit 2 bezeichnet ist, hat einen Stromversorgungsstecker 1, der im Inneren verdeckt angeordnet ist. Zur Abdeckung einer der Unterseite der Gehäusewandung 15 vorgesehenen Öffnung 16 ist eine Scheibe 3 parallel verschiebbar zur Wand 15 vorgesehen. Die Scheibe 3 ist mittels eines Ansatzes durch eine Feder 4 gegen einen Bock 17 vorgespannt, so daß der Stecker 1 durch sie abgedeckt ist. Die Scheibe 3 hat nach außen hin eine Nut 5, in die ein Pimpel 6 einer Betätigungsstange 7 eingreift. Die Betätigungsstange ist verschiebbar an einem Deckel 10 des Ladegerätes gelagert. Der Pimpel 6 greift dabei durch eine Öffnung 18 im Deckel 10 bis zur Nut 5 der Scheibe hindurch.

Wir der Schieber 7 gegen den Federdruck der Feder 4 betätigt, so wird die Öffnung für die Kontaktierung der Kontakte 1 und 9 freigegeben. 9 ist dabei der aus dem Ladegerät hervorstehende Kontaktstecker.

Um den Vorgang zu automatisieren ist folgende Vorrichtung vorgesehen. Einerseits ist der Deckel 10 des Ladegerätes durch ein nicht dargestelltes rechts außen in der Figur befindliches Scharnier bewegbar gehalten.

Auf der anderen Seite greift eine Fortsetzung der Betätigungsstange 7 durch eine Gehäuseöffnung hindurch und hat an diesem Ende eine Rolle 11, die in eine Kurvennut 12 eingreift. Wird nach der Auflage des Hand funkgerätes auf den Deckel 10 dieser niedergedrückt, so rollt die Rolle 11 in der Kurvennut 12 ab und zieht den Schieber in der Endstellung vollkommen auf, wobei gleichzeitig durch die entstandene Öffnung der Stift 9 des Ladegerätes in den Gegenkontakt 1 des Handfunkgerätes eingreift.

Um Toleranzen auszugleichen, ist die Rolle 11 senkrecht zu ihrer Achse 13 bewegbar geführt und durch eine Feder 14 vorgespannt.

Es entsteht hierdurch eine Anordnung, die durch wechselweises Zusammenspiel zwischen dem Handapparat und dem Ladegerät eine automatische Kontaktierung herstellt, wobei der Handapparat im abgehobenen Zustand dicht verriegelbar ist.

## Ansprüche

1. Elektrische Kontaktiervorrichtung mit Kontaktschutzeinrichtung, insbesondere für die Stromversorgung bewegbarer nachrichtentechnischer Geräte, **dadurch gekennzeichnet,** daß der einzelne Kontaktstift (1) des Gerätes im Inneren seines Gehäuses (2) hinter einer senkrecht zur Steckrichtung im Gehäuse des Gerätes verschiebbaren Scheibe (3) angeordnet ist, die durch eine Feder (4) im Ruhezustand geschlossen ist und die nach außen hin eine Nut (5) hat, in die ein Pimpel (6) einer Betätigungsstange (7) im Gehäuse des Stromversorgungsgerätes (8) eingreift und die Verschlußscheibe (3) vor der Kontaktierung gegen den Druck der Feder (4) zur Seite schiebt und den Weg für die Kontaktstifte (1, 9) freigibt.

2. Elektrische Kontaktiervorrichtung nach Anspruch 1, **dadurch gekennzeichnet,** daß die Betätigungsstange (7) als Schiebestück im Inneren eines scharnierförmig klappbaren Deckels (10) der Stromversorgungseinrichtung (8) angeordnet ist und an einem Ende eine Rolle (11) hat, die in eine Kurvennut (12) im Gehäuse der Stromversorgungseinrichtung eingreift und bei Druck auf den Deckel (10) durch Abrollen in der Nut (12) unter gleichzeitigem Eingriff in die Nut (5) der Scheibe (3) diese öffnet.

3. Elektrische Kontaktiervorrichtung nach Anspruch 2, **dadurch gekennzeichnet,** daß die Achse (13) der Rolle (11) durch eine Feder (14) quer zu ihrer Richtung zum Toleranzausgleich vorgespannt ist.

## FIG 1

## FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 702 129 (BOSCH) <br> * Seite 5, Zeilen 13-15; Figur 1 * <br> --- | 1 | H 01 R 13/447 |
| A | EP-A-0 157 513 (ALLIED CORP.) <br> * Seite 5, Zeilen 15-18; Figur 1 * <br> --- | 1 | |
| A | US-A-4 600 257 (H. FUSHIMOTO) <br> * Spalte 5, Zeilen 23-65; Figuren 11-12 * <br> --- | 1 | |
| A | EP-A-0 182 720 (FUJITSU LTD.) <br> * Figuren 1, 2, 12, 16 * <br> ----- | 1 | |

RECHERCHIERTE
SACHGEBIETE (Int. Cl.4)

H 01 R    13/00
H 02 J     7/00
H 02 B     1/00
H 04 M     1/00

Der vorliegende Recherchenbericht wurde für alle Patentansprüche erstellt

| Recherchenort | Abschlußdatum der Recherche | Prüfer |
|---|---|---|
| BERLIN | 26-11-1987 | LEOUFFRE M. |